# EUROPEAN PATENT SPECIFICATION

(11) **EP 4 213 278 B1**
(45) Date of publication and mention of the grant of the patent: **26.11.2025**
(21) Application number: 23150588.4
(22) Date of filing: 06.01.2023
(51) Int. Cl.: H01M 50/103, H01M 50/133, H01M 50/169, H01M 50/176, H01M 50/342

(54) **SECONDARY BATTERY**
SEKUNDÄRBATTERIE
BATTERIE SECONDAIRE

(30) Priority: 14.01.2022 KR 20220005834
(43) Date of publication of application: 19.07.2023
(73) Proprietor: Samsung SDI Co., Ltd., Yongin-si, Gyeonggi-do 17084 (KR)
(72) Inventor: Yong, Jun Sun, 17084 Yongin-si, Gyeonggi-do (KR); Kim, Joong Hun, 17084 Yongin-si, Gyeonggi-do (KR); Lim, Hye Rin, 17084 Yongin-si, Gyeonggi-do (KR); Lee, Hyun Soo, 17084 Yongin-si, Gyeonggi-do (KR); Shin, Ho Jun, 17084 Yongin-si, Gyeonggi-do (KR); Cho, Chang Hun, 17084 Yongin-si, Gyeonggi-do (KR)
(74) Representative: Gulde & Partner

(56) References cited:
- EP-A1- 3 751 633
- WO-A1-2021/241939
- CN-A- 110 828 714
- DE-A1- 102018 207 327
- KR-A- 20120 048 802
- US-A1- 2018 331 331

## Description

### BACKGROUND

### 1. Field

Aspects of embodiments of the present disclosure relate to a secondary battery.

### 2. Description of the Related Art

Batteries may be classified into a prismatic battery, a cylindrical battery, a pouch-type battery, and the like, according to the shape. The prismatic or cylindrical battery may be formed by inserting an electrode assembly having a positive electrode, a negative electrode, and a separator into a metal can, or case, and then sealing the same, while the pouch-type battery may be manufactured by wrapping an electrode assembly with an aluminum foil coated with an insulator.

Traditional methods for manufacturing a battery can, or case, may include a deep drawing process, an impact process, and the like. As an example, in the deep drawing process, a sheet-shaped metal plate may be placed on a forming die, and approximately ten punches may be applied to the metal plate by means of a punch to complete the can. As another example, in the impact process, a slug in the form of a billet is placed on a forming die, and approximately one strong punch may be applied to the slug by means of a punch to complete the can. This impact process can reduce the number of processing steps, thereby lowering the manufacturing cost of the can.

However, both of the conventional deep drawing process and the impact process have limitations in reducing the thickness of the can due to manufacturing process characteristics, and there may be a great deviation in the thickness of the can according to the region of the can. In addition, the conventional methods have a problem in that the manufacturing cost of the can is also high. Examples may be found in EP 3751633 A1, US 2018/0331331 A1 or KR 1020120048802 A.

The above information disclosed in this Background section is provided for enhancement of understanding of the background of the invention and, therefore, it may contain information that does not constitute prior art.

### SUMMARY

The invention is defined by the appended claims. The description that follows is subjected to this limitation. Any disclosure lying outside the scope of said claims is only intended for illustrative as well as comparative purposes. According to an aspect of embodiments of the present disclosure, a secondary battery is provided in which a thin can, or case, without a thickness deviation (without or substantially without a thickness deviation), with high precision, and a small thickness, can be manufactured by forming a bottom part and a pair of side parts through bending, and combining a separate cover part with the can (e.g., and then combining a separate cover part to form the can), and a vent can be provided in the can by forming a cover having a greater thickness than other parts.

A secondary battery according to the present invention includes: an electrode assembly; a can including a bottom part, a pair of side parts integrally formed with the bottom part and bent so as to extend from the bottom part, and a cover part coupled to the pair of side parts to face the bottom part and including a vent, the case accommodating the electrode assembly; and a pair of cap assemblies coupled to open ends of the can to seal the can.

A thickness of the cover part may be greater than a thickness of the bottom part and the pair of side parts.

At ends of the pair of side parts, a pair of coupling parts are inwardly bent and extend toward each other.

The cover part is coupled to at least partially overlap with outer surfaces of the pair of coupling parts, and includes a pair of steps seated on the pair of coupling parts.

Side surfaces of the cover part and outer surfaces of the pair of coupling parts may be welded.

The cover part may be coupled between the pair of coupling parts.

A side surface or an outer surface of the cover part and outer surfaces of the pair of coupling parts may be welded.

The cover part may include, on a side thereof coupled to the pair of side parts, a pair of extension parts that extend parallel to each other.

An outer surface of the cover part and ends of the pair of side parts may be welded.

### BRIEF DESCRIPTION OF DRAWINGS

FIG. 1 is a perspective view of a secondary battery according to an embodiment of the present disclosure.
FIG. 2 is an exploded perspective view of the secondary battery of FIG. 1.
FIG. 3 is a perspective view showing a state in which a can of FIG. 2 is separated by components.
FIG. 4 is an enlarged view of a region "A" of FIG. 2.
FIG. 5 is a side view showing side surfaces of a can according to an embodiment of the present disclosure not falling under the present invention.
FIG. 6 is a side view showing side surfaces of a can according to an embodiment of the present disclosure not falling under the present invention.

### DETAILED DESCRIPTION

Some examples of the present disclosure are provided to more completely explain the present disclosure to those skilled in the art; however, the following examples may be modified in various other forms. That is, the present disclosure may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components may be exaggerated for brevity and clarity. Like numbers refer to like elements throughout. As used herein, the term "and/or" includes any and all combinations of one or more of the associated listed items. In addition, it is to be understood that when an element A is referred to as being "connected to" an element B, the element A may be directly connected to the element B or one or more intervening elements C may be present therebetween such that the element A and the element B are indirectly connected to each other.

The terminology used herein is for the purpose of describing particular embodiments and is not intended to be limiting of the disclosure. As used herein, the singular forms are intended to include the plural forms as well, unless the context clearly indicates otherwise. It is to be further understood that the terms that the terms "comprise" or "include" and/or "comprising" or "including" when used in this specification, specify the presence of stated features, numbers, steps, operations, elements, and/or components, but do not preclude the presence or addition of one or more other features, numbers, steps, operations, elements, components, and/or groups thereof.

It is to be understood that, although the terms "first," "second," etc. may be used herein to describe various members, elements, regions, layers, and/or sections, these members, elements, regions, layers, and/or sections should not be limited by these terms. These terms are used to distinguish one member, element, region, layer, and/or section from another. Thus, for example, a first member, a first element, a first region, a first layer, and/or a first section discussed below could be termed a second member, a second element, a second region, a second layer, and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the example term "below" can encompass both an orientation of above and below.

Unless otherwise defined, all terms (including technical and scientific terms) used herein have the same meaning as commonly understood by one of ordinary skill in the art to which the inventive concept pertains. It is also to be understood that terms defined in commonly used dictionaries should be interpreted as having meanings consistent with the meanings in the context of the related art, and are expressly defined herein unless they are interpreted in an ideal or overly formal sense.

Herein, a secondary battery according to an embodiment of the present disclosure will be described in further detail with reference to the accompanying drawings.

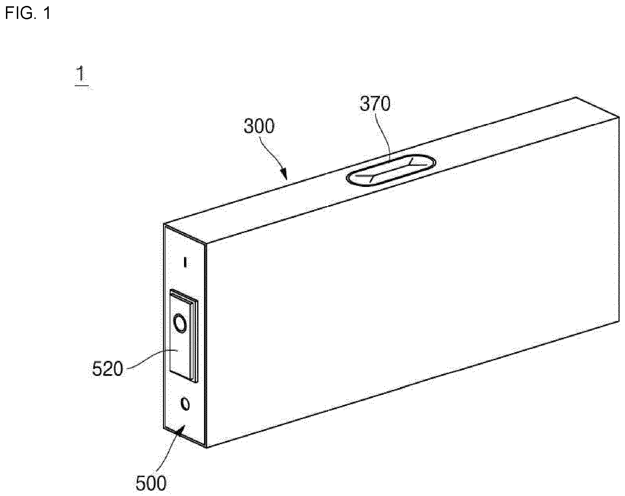

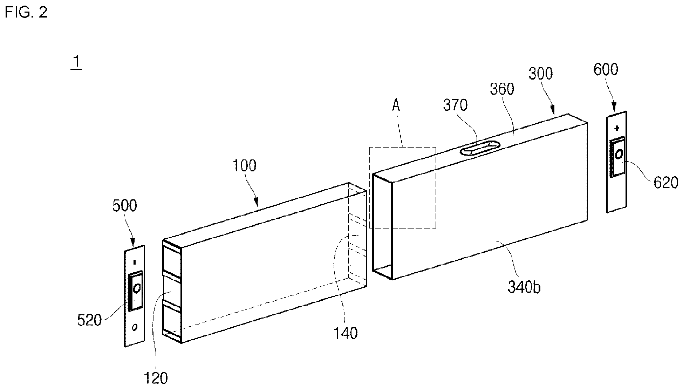

As shown in FIGS. 1 and 2, a secondary battery 1 according to an embodiment of the present disclosure may include an electrode assembly 100, a can, or case, 300, and a pair of cap assemblies 500 and 600.

The electrode assembly 100 is accommodated in the can 300 having both open ends facing away from each other, and cap assemblies 500 and 600 are coupled to both open ends of the can 300 to seal the can 300. The electrode assembly 100 is accommodated in the can 300 together with an electrolyte.

The electrode assembly 100 may be formed by stacking or winding a negative electrode plate, a separator, and a positive electrode plate formed in a thin plate shape or a film shape.

The negative electrode plate may be formed by coating a negative electrode active material, such as graphite or carbon, on a negative electrode substrate formed of a metal foil, such as copper, a copper alloy, nickel, or a nickel alloy. A negative electrode uncoated portion to which an anode active material is not applied may be formed on a portion of the negative electrode substrate, and a negative electrode tab 120 is formed on the negative electrode uncoated portion. The negative electrode tab 120 is formed to face a side along a longitudinal direction of the electrode assembly 100.

The positive electrode plate may be formed by coating a positive electrode active material, such as a transition metal oxide, on a positive electrode substrate formed of a metal foil, such as aluminum or an aluminum alloy. A positive electrode uncoated portion to which a positive electrode active material is not applied may be formed on a portion of the positive electrode substrate, and a positive electrode tab 140 is formed on the positive electrode uncoated portion. The positive electrode tab 140 is formed to face an opposite side along the longitudinal direction of the electrode assembly 100. That is, the negative electrode tab 120 and the positive electrode tab 140 are respectively formed at opposite ends in opposite directions along the longitudinal direction of the electrode assembly 100.

The separator is disposed between the negative electrode plate and the positive electrode plate to prevent or substantially prevent a short circuit and enables the movement of lithium ions. The separator may be made of polyethylene, polypropylene, a composite film of polyethylene and polypropylene, or the like, but is not limited thereto.

The can 300 may be formed of a conductive metal, such as aluminum, an aluminum alloy, or nickel-plated steel. For example, the can 300 may have a rectangular parallelepiped shape, and both ends thereof in the longitudinal direction are open. The can 300 includes a bottom part 320, a pair of side parts 340a and 340b, and a cover part 360, and is open in directions of the negative electrode tab 120 and the positive electrode tab 140, respectively. The can 300 will now be further described.

A negative-electrode-side cap assembly 500 is coupled to an end of the can 300 and includes a negative electrode terminal 520 electrically connected to the negative electrode tab 120. A positive-electrode-side cap assembly 600 is coupled to another end of the can 300 and includes a positive electrode terminal 620 electrically connected to the positive electrode tab 140.

As described above, as the negative electrode tab 120 and the positive electrode tab 140 are formed at opposite ends, that is, at side portions, in the longitudinal direction of the electrode assembly 100, a space utilization rate is relatively high, compared to a case in which a negative electrode tab and a positive electrode tab are disposed on a wide surface of the electrode assembly 100. In addition, cooling may be concurrently (e.g., simultaneously) performed in regions of a pair of wide surfaces of the electrode assembly 100, that is, in upper and lower regions of the electrode assembly 100. In addition, as the negative electrode tab 120 and the positive electrode tab 140 are horizontally disposed at opposite ends of the electrode assembly 100 in the longitudinal direction, a charge/discharge current flows in the horizontal direction, thereby reducing battery deterioration.

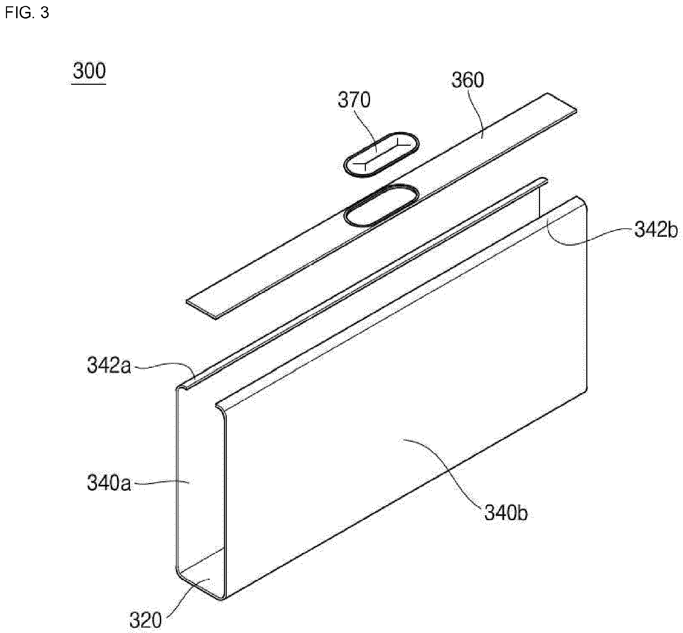

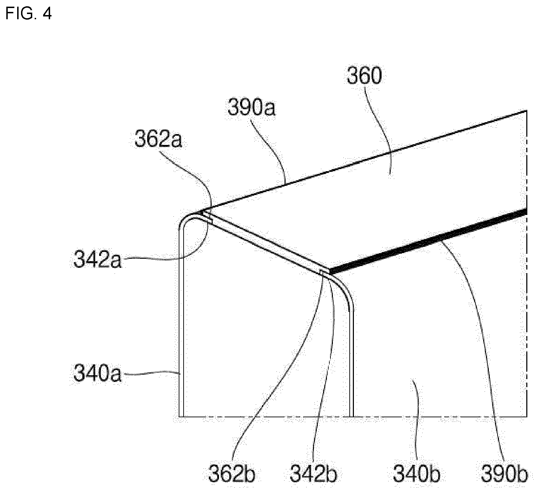

As shown in FIGS. 3 and 4, the can 300 includes a bottom part 320, a pair of side parts 340a and 340b that are integrally formed with the bottom part 320 and extend by bending both sides thereof around the bottom part 320, and a cover part 360 that is coupled to the pair of side parts 340a and 340b so as to face the bottom part 320 and includes a vent 370. That is, the bottom part 320 and the pair of side parts 340a and 340b are integrally formed by bending one plate, and the cover part 360 is formed as a separate plate to be coupled to the pair of side parts 340a and 340b, thereby forming the can 300. Here, although it has been described that the side provided with the vent 370 is a cover part and the opposite side is a bottom part, the side provided with the vent 370 may be a bottom part and the opposite side may be a cover part.

The bottom part 320 has long sides and short sides, and, in an embodiment, the pair of side parts 340a and 340b are bent upward by approximately 90 degrees and extend from each of the long sides of the bottom part 320. Here, bent portions connecting the bottom part 320 and the pair of side parts 340a and 340b may include rounded portions having a certain radius of curvature (e.g., a predetermined radius of curvature).

In order to form the bottom part 320 and the pair of side parts 340a and 340b, an approximately flat metal plate having a uniform (uniform or substantially uniform) thickness may be provided. In some examples, the metal plate may include any of aluminum (Al), iron (Fe), copper (Cu), titanium (Ti), nickel (Ni), magnesium (Mg), chromium (Cr), manganese (Mn), zinc (Zn), or alloys thereof. In some examples, the metal plate may include nickel (Ni) plated iron (Fe) or SUS (e.g., SUS 301, SUS 304, SUS 305, SUS 316L, or SUS 321).

In an embodiment, a thickness of the metal plate may be approximately 0.1 mm to approximately 10 mm, and a thickness deviation in all regions may be less than approximately 0.1% to approximately 1%. Therefore, according to the present disclosure, the can 300 that is thinner and has a smaller thickness variation than in the related art can be provided.

In one or more embodiments, the metal plate may be pretreated such that a bending process and/or a welding process may be easily performed. In some examples, the metal plate may be annealed for a specific time in a specific temperature range in a specific gas atmosphere. In some examples, the annealing treatment may be performed in an atmosphere of inert gas, such as argon (Ar) or nitrogen (N₂), and at a temperature of about 300 °C to about 1000 °C for about 10 seconds to 60 minutes. By the annealing process, the elongation of the metal plate may be increased by about 5% to about 60% and, accordingly, the bending process of the metal plate to be described below may be easily performed, and, in particular, a spring-back phenomenon occurring after the bending process can be minimized or reduced.

The metal plate may be respectively bent at both sides to form the pair of side parts 340a and 340b that are bent from the bottom part 320 after being fixed to a bending machine or a press mold.

As described above, after the bottom part 320 and the pair of side parts 340a and 340b are formed, the cover part 360 is coupled to the pair of side parts 340a and 340b. In an embodiment, to provide the vent 370 in the cover part 360, the cover part 360 is formed to have a greater thickness than the bottom part 320 and the pair of side parts 340a and 340b.

The cover part 360 is welded to the pair of side parts 340a and 340b. Welding may refer to laser welding, and may include, for example, CO₂ laser, fiber laser, disk laser, semiconductor laser, and/or yttrium aluminum garnet (YAG) laser. Here, a welding region may be referred to as a tack-welding region and/or a main welding region in some cases. In an embodiment, the vent 370 may also be bonded to an opening of the cover part 360 by welding.

For coupling of the cover part 360 coupling parts 342a and 342b that are inwardly bent toward each other and extend are formed at ends of the pair of side parts 340a and 340b. Here, bent portions connecting the pair of side parts 340a and 340b and the pair of coupling parts 342a and 342b may include rounded portions having a certain radius of curvature (e.g., a predetermined radius of curvature).

The cover part 360 is coupled to at least partially overlap the outer surfaces of the pair of coupling parts 342a and 342b, and has a pair of steps 362a and 362b seated on the pair of coupling parts 342a and 342b. In an embodiment, the cover part 360 includes a portion having a width corresponding to a distance between the pair of coupling parts 342a and 342b, and a portion having a greater width to form the pair of steps 362a and 362b.

Here, a side surface of the cover part 360 and an outer surface of the pair of coupling parts 342a and 342b may be welded. FIG. 4 shows a welding region 390a for coupling a side of the cover part 360 with the outer surface of the coupling part 342a, and a welding region 390b for coupling another side of the cover part 360 with the outer surface of the coupling part 342b.

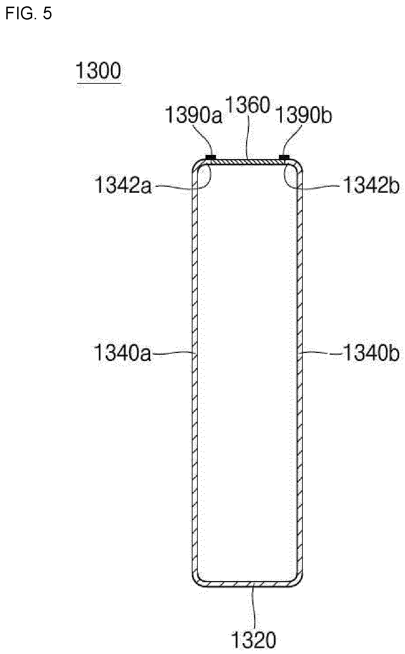

Next, referring to FIG. 5, a can 1300 according to another embodiment of the present disclosure not falling under the present invention will be described. Since the can 1300 shown in FIG. 5 may be formed in the same manner as the can 300 shown in FIGS. 3 and 4, except for a cover part, the following description will focus on different parts.

The can 1300 includes a bottom part 1320, a pair of side parts 1340a and 1340b that are integrally formed with the bottom part 1320 and extend by bending both sides thereof around the bottom part 1320, and a cover part 1360 that is coupled to the pair of side parts 1340a and 1340b so as to face the bottom part 1320 and includes a vent. In an embodiment, the cover part 1360 is formed to have a greater thickness than the bottom part 1320 and the pair of side parts 1340a and 1340b. The cover part 1360 is coupled to the pair of side parts 1340a and 1340b by welding.

For coupling of the cover part 1360, in an embodiment, coupling parts 1342a and 1342b that are inwardly bent toward each other and extend are formed at ends of the pair of side parts 1340a and 1340b.

The cover part 1360 is coupled between the pair of coupling parts 1342a and 1342b. In an embodiment, the cover part 1360 has a width corresponding to a distance between the pair of coupling parts 1342a and 1342b. Here, a side surface or an outer surface of the cover part 1360 and outer surfaces of the pair of coupling parts 1342a and 1342b may be welded. FIG. 5 shows a welding region 1390a for coupling an outer side of the cover part 1360 with an outer surface of the coupling part 1342a, and a welding region 1390b for coupling another outer side of the cover part 1360 with an outer surface of the coupling part 1342b.

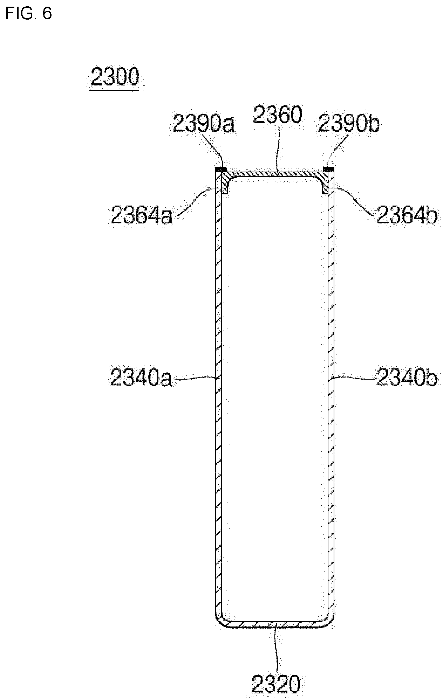

Next, referring to FIG. 6, a can 2300 according to another embodiment of the present disclosure not falling under the present invention will be described. The can 2300 shown in FIG. 6 differs from the can 300 shown in FIGS. 3 and 4 with respect to: a feature wherein a pair of coupling parts are not formed; and a cover part.

The can 2300 includes a bottom part 2320, a pair of side parts 2340a and 2340b that are integrally formed with the bottom part 2320 and extend by bending both sides thereof around the bottom part 2320, and a cover part 2360 that is coupled to the pair of side parts 2340a and 2340b so as to face the bottom part 2320 and includes a vent. In an embodiment, the cover part 2360 is formed to have a greater thickness than the bottom part 2320 and the pair of side parts 2340a and 2340b. The cover part 2360 is coupled to the pair of side parts 2340a and 2340b by welding.

The cover part 2360 is coupled between the pair of coupling parts 2342a and 2342b. In an embodiment, the cover part 2360 has a width corresponding to a distance between the pair of side parts 2340a and 2340b. In addition, the cover part 2360 has, on a side thereof coupled to the pair of side parts 2340a and 2340b, a pair of extension parts 2364a and 2364b that extend in parallel with each other. Accordingly, when the cover part 2360 is coupled between the pair of side parts 2340a and 2340b, the pair of extension parts 2364a and 2364b of the cover part 2360 come into contact with inner surfaces of the pair of side parts 2340a and 2340b, thereby achieving secure sealing.

Here, an outer surface of the cover part 2360 and ends of the pair of side parts 2340a and 2340b may be welded. FIG. 6 shows a welding region 2390a for coupling an outer side of the cover part 2360 with an end of the side part 2340a, and a welding region 2390b for coupling another outer side of the cover part 2360 with an end of the side part 2340b.

As described above, according to one or more embodiments of the present disclosure, by forming a bottom part and a pair of side parts through bending and then combining a separate cover part to form a can, a can without or substantially without thickness deviation, high precision, and a small thickness can be manufactured.

In addition, by forming a cover part having a vent so as to have a greater thickness than other parts in the can, a vent can be provided in the can.

## Claims

1. A secondary battery (1) comprising:
an electrode assembly (100) including a negative electrode tab (120) and a positive electrode tab (140) both horizontally disposed at opposite ends of the electrode assembly (100) in the longitudinal direction;
a can (300) comprising a bottom part (320), a pair of side parts (340a, 340b) integrally formed with the bottom part (320) and bent so as to extend from the bottom part (320, 1320, 2320), and a cover part (360) coupled to the pair of side parts (340a, 340b) to face the bottom part (320) and comprising a vent (370), the can accommodating the electrode assembly (100); and
a pair of cap assemblies (500, 600) coupled to open ends of the can (300) to seal the can (300),
wherein the pair of cap assemblies (500, 600) consists of a negative-electrode-side cap assembly (500) coupled to an end of the can (300) and a positive-electrode-side cap assembly (600) coupled to the opposite end of the can (300), and
the negative-electrode-side cap assembly (500) includes a negative electrode terminal (520) electrically connected to the negative electrode tab (120), and
the positive-electrode-side cap assembly (600) includes a positive electrode terminal (620) electrically connected to the positive electrode tab (140),
**characterised in that** at ends of the pair of side parts (340a, 340b), a pair of coupling parts (342a, 342b) are inwardly bent toward each other and the cover part (360) is coupled to at least partially overlap with outer surfaces of the pair of coupling parts (342a, 342b), and comprises a pair of steps (362a, 362b) seated on the pair of coupling parts (342a, 342b).

2. The secondary battery of claim 1, wherein a thickness of the cover part (360) is greater than a thickness of the bottom part (320) and the pair of side parts (340a, 340b).

3. The secondary battery of claim 2, wherein an opening is formed through the cover part (360), and the vent (370) is coupled to the opening.

4. The secondary battery of claim 1, wherein side surfaces of the cover part (360) and the outer surfaces of the pair of coupling parts (342a, 342b) are welded.

5. The secondary battery of claim 1, wherein the coupling parts (342a, 342b) are bent to be rounded from the ends of the pair of side parts (340a, 340b).

## Patentansprüche

1. Sekundärbatterie (1), umfassend:
eine Elektrodenanordnung (100) mit einer negativen Elektrodenlasche (120) und einer positiven Elektrodenlasche (140), die beide horizontal an gegenüberliegenden Enden der Elektrodenanordnung (100) in Längsrichtung angeordnet sind;
eine Dose (300) mit einem Bodenteil (320), einem Paar Seitenteile (340a, 340b), die einstückig mit dem Bodenteil (320) ausgebildet und so gebogen sind, dass sie sich vom Bodenteil (320, 1320, 2320) erstrecken, und einem Deckelteil (360), der mit dem Paar Seitenteile (340a, 340b) verbunden ist, um dem Bodenteil (320) gegenüberzuliegen, und eine Entlüftungsöffnung (370) umfasst, wobei die Dose die Elektrodenanordnung (100) aufnimmt; und
ein Paar von Kappenanordnungen (500, 600), die mit den offenen Enden der Dose (300) gekoppelt sind, um die Dose (300) abzudichten,
wobei das Paar von Kappenanordnungen (500, 600) aus einer Kappenanordnung (500) auf der Seite der negativen Elektrode, die mit einem Ende der Dose (300) gekoppelt ist, und einer Kappenanordnung (600) auf der Seite der positiven Elektrode, die mit dem gegenüberliegenden Ende der Dose (300) gekoppelt ist, besteht, und
die Kappenanordnung (500) auf der Seite der negativen Elektrode einen negativen Elektrodenanschluss (520) umfasst, der elektrisch mit der negativen Elektrodenlasche (120) verbunden ist, und
die Kappenanordnung (600) auf der Seite der positiven Elektrode einen positiven Elektrodenanschluss (620) umfasst, der elektrisch mit der positiven Elektrodenlasche (140) verbunden ist,
**dadurch gekennzeichnet, dass**
an den Enden des Paares von Seitenteilen (340a, 340b) ein Paar von Kupplungsteilen (342a, 342b) nach innen zueinander gebogen ist und der Deckelteil (360) so gekoppelt ist, dass es zumindest teilweise die Außenflächen des Paares von Kupplungsteilen (342a, 342b) überlappt, und ein Paar von Stufen (362a, 362b) umfasst, die auf dem Paar von Kupplungsteilen (342a, 342b) sitzen.

2. Sekundärbatterie nach Anspruch 1, wobei eine Dicke des Deckelteils (360) größer ist als eine Dicke des Bodenteils (320) und des Paares von Seitenteilen (340a, 340b).

3. Sekundärbatterie nach Anspruch 2, wobei eine Öffnung durch den Deckelteil (360) gebildet ist und die Entlüftungsöffnung (370) mit der Öffnung gekoppelt ist.

4. Sekundärbatterie nach Anspruch 1, wobei die Seitenflächen des Deckelteils (360) und die Außenflächen des Paares von Kupplungsteilen (342a, 342b) verschweißt sind.

5. Sekundärbatterie nach Anspruch 1, wobei die Kupplungsteile (342a, 342b) so gebogen sind, dass sie von den Enden des Paares von Seitenteilen (340a, 340b) aus abgerundet sind.

## Revendications

1. Batterie secondaire (1) comportant :
un ensemble d'électrodes (100) incluant une languette d'électrode négative (120) et une languette d'électrode positive (140) toutes les deux disposées horizontalement à des extrémités opposées de l'ensemble d'électrodes (100) dans la direction longitudinale ;
un boîtier (300) comportant une partie de fond (320), une paire de parties latérales (340a, 340b) formées d'un seul tenant avec la partie de fond (320) et cintrées de façon à s'étendre à partir de la partie de fond (320, 1320, 2320), et une partie couvercle (360) couplée à la paire de parties latérales (340a, 340b) pour faire face à la partie de fond (320) et comportant un évent (370), le boîtier recevant l'ensemble d'électrodes (100) ; et
une paire d'ensembles capuchon (500, 600) couplés à des extrémités ouvertes du boîtier (300) pour rendre étanche le boîtier (300),
dans laquelle la paire d'ensembles capuchon (500, 600) consiste en un ensemble capuchon côté électrode négative (500) couplé à une extrémité du boîtier (300) et un ensemble capuchon côté électrode positive (600) couplé à l'extrémité opposée du boîtier (300), et
l'ensemble capuchon côté électrode négative (500) inclut une borne d'électrode négative (520) électriquement connectée à la languette d'électrode négative (120), et
l'ensemble capuchon côté électrode positive (600) inclut une borne d'électrode positive (620) électriquement connectée à la languette d'électrode positive (140),
**caractérisée en ce que**, aux extrémités de la paire de parties latérales (340a, 340b), une paire de parties de couplage (342a, 342b) sont cintrées vers l'intérieur l'une vers l'autre et la partie couvercle (360) est couplée pour au moins partiellement chevaucher les surfaces externes de la paire de parties de couplage (342a), 342b), et comporte une paire de gradins (362a, 362b) reposant sur la paire de parties de couplage (342a, 342b).

2. Batterie secondaire selon la revendication 1, dans laquelle une épaisseur de la partie couvercle (360) est supérieure à une épaisseur de la partie de fond (320) et de la paire de parties latérales (340a, 340b).

3. Batterie secondaire selon la revendication 2, dans laquelle une ouverture est formée à travers la partie couvercle (360), et l'évent (370) est couplé à l'ouverture.

4. Batterie secondaire selon la revendication 1, dans laquelle les surfaces latérales de la partie couvercle (360) et les surfaces externes de la paire de parties de couplage (342a, 342b) sont soudées.

5. Batterie secondaire selon la revendication 1, dans laquelle les parties de couplage (342a, 342b) sont cintrées pour être arrondies à partir des extrémités de la paire de parties latérales (340a, 340b).
